(19) Europäisches Patentamt / European Patent Office / Office européen des brevets

(11) **EP 4 129 457 B1**

(12) **EUROPEAN PATENT SPECIFICATION**

(45) Date of publication and mention of the grant of the patent:
**29.04.2026 Bulletin 2026/18**

(21) Application number: **21782001.8**

(22) Date of filing: **30.03.2021**

(51) International Patent Classification (IPC):
**B01D 71/52** $^{(2006.01)}$  **B01D 71/68** $^{(2006.01)}$
**B01D 71/82** $^{(2006.01)}$

(52) Cooperative Patent Classification (CPC):
**B01D 71/72; B01D 67/0009; B01D 67/00931; B01D 69/02; B01D 69/08; B01D 71/5223;** B01D 2325/14; Y02A 20/131

(86) International application number:
**PCT/JP2021/013594**

(87) International publication number:
**WO 2021/200982 (07.10.2021 Gazette 2021/40)**

(54) **POLYPHENYLENE-BASED SEMIPERMEABLE MEMBRANE AND MANUFACTURING METHOD THEREFOR**

SEMIPERMEABLE MEMBRAN AUF POLYPHENYLENBASIS UND HERSTELLUNGSVERFAHREN DAFÜR

MEMBRANE SEMI-PERMÉABLE À BASE DE POLYPHÉNYLÈNE ET SON PROCÉDÉ DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2020 JP 2020060684**

(43) Date of publication of application:
**08.02.2023 Bulletin 2023/06**

(73) Proprietor: **TOYOBO CO., LTD.**
**Osaka-shi, Osaka 530-0001 (JP)**

(72) Inventors:
• **SHIBUYA, Masafumi**
 **Otsushi, Shiga 520-0292 (JP)**
• **OHKAME, Takashi**
 **Otsushi, Shiga 5200292 (JP)**

(74) Representative: **Vossius & Partner**
**Patentanwälte Rechtsanwälte mbB**
**Siebertstraße 3**
**81675 München (DE)**

(56) References cited:
WO-A1-2020/027056  JP-A- 2018 058 040
JP-A- H0 214 725  JP-A- H06 350
JP-A- S6 354 452  US-A1- 2015 209 736

• FU HONGYONG ET AL: "Studies on the sulfonation of poly(phenylene oxide) (PPO) and permeation behavior of gases and water vapor through sulfonated PPO membranes. I. Sulfonation of PPO and characterization of the products", JOURNAL OF APPLIED POLYMER SCIENCE, vol. 51, no. 8, 22 February 1994 (1994-02-22), US, pages 1399 - 1404, XP093133954, ISSN: 0021-8995, DOI: 10.1002/app.1994.070510806
• WANG CHUANQING ET AL: "Preparation and Characterization of Sulfonated Poly(phenylence oxide)", POLYMER JOURNAL, vol. 27, no. 2, 1 February 1995 (1995-02-01), London, pages 173 - 178, XP093073002, ISSN: 0032-3896, DOI: 10.1295/polymj.27.173

**Description**

TECHNICAL FIELD

The present invention relates to a polyphenylene-based semipermeable membrane and a production method therefor.

BACKGROUND ART

A nanofiltration method is a membrane separation method that is operated under pressure, and excellent in capturing dissolved molecules, heavy metal ions, and other small particles. The nanofiltration method is one of membrane separation technologies included in reverse osmosis processes, but a general term of the membrane separation technology that performs reverse osmosis by using a semipermeable membrane having solute permeability of an intermediate level between a reverse osmosis membrane and an ultrafiltration membrane.

Many nanofiltration membranes developed to date are organic membranes or organic and inorganic mixed type membranes. Particularly in the organic membranes, most of them are composite semipermeable membranes, and one having a separation functional layer which crosslinks a gel layer and a polymer on a porous supporting membrane, one having the separation functional layer in which monomers are subjected to polycondensation on the porous supporting membrane, etc. have been known. Above all, the composite semipermeable membrane obtained by coating the separation functional layer composed of a crosslinked polyamide obtained by an interfacial polycondensation reaction of a polyfunctional amine and a polyfunctional acid halide on the porous supporting membrane is widely used as a separating membrane which is high in permeability and selective separation performance. For example, in Patent Literature 1 (Japanese Patent Laying-Open No. 55-147106), disclosed is a sheet-like composite that a thin film of polyamide crosslinked by the interfacial polycondensation reaction is formed on a surface of the porous supporting membrane. Further, as the composite nanofiltration membrane that exhibits high water permeability and high fouling resistance, for example, in Patent Literature 2 (WO 1997/34686), disclosed is the nanofiltration membrane composed of a supporting body material having a layer consisting of a polyamide and a separating layer that polyvinyl alcohol is applied on that supporting body material. The polyamide-based organic membranes disclosed in Patent Literatures 1 and 2 are widely used for seawater desalination, drainage treatment application, etc.

As the nanofiltration membrane excellent in alkali resistance and chlorine resistance, for example, in Patent Literature 3 (Japanese Patent Laying-Open No. 2013-31836), disclosed is a separating membrane using a sulfonated polyarylene ether sulfone polymer. In Patent Literature 3, the sulfonated polyarylene ether sulfone polymer is used as a material for the nanofiltration membrane, and it is found that a sulfonic acid group in the membrane and bound water are well interacted to be able to achieve salt removability and water permeability in a high level, by controlling a position of a peak top derived from the bound water in a water containing state of this membrane to a region of a specific chemical shift. It has been exhibited that the separating membrane of the polymer described above has strong resistance to both of an alkaline chemical and a chlorine chemical.

Membranes comprising sulfonated polyphenylene are known from Fu et al., J. Appl. Polym. Sci., vol. 51, no. 8, pages 1399-1404.

CITATION LIST

PATENT LITERATURE

   PTL 1: Japanese Patent Laying-Open No. 55-147106
   PTL 2: WO 1997/34686
   PTL 3: Japanese Patent Laying-Open No. 2013-31836

SUMMARY OF INVENTION

TECHNICAL PROBLEM

In recent years, in the fields of treatment of industrial drainage (wastewater), recovery of organic solvents, and production of pharmaceuticals, etc., attempts have been made to reduce cost and improve productivity by using the membrane separation technology. In case that membrane separation is used for such applications, focused is resistance to chemicals and mechanical strength as well as separation characteristics and treatment flow volume. An objective of the present invention is to provide a separating membrane that can solve the problem described above.

SOLUTION TO PROBLEM

The above problem can be solved by the present invention as defined in the appended claims.

ADVANTAGEOUS EFFECTS OF INVENTION

According to the present invention, the semipermeable membrane achieving chemical resistance (chlorine-resistance, acid-resistance, alkali-resistance), membrane performance and membrane strength can be obtained by sulfonating the polyphenylene-based semipermeable membrane base material on specific conditions.

BRIEF DESCRIPTION OF DRAWINGS

Fig. 1 is a schematic view showing a sulfonated layer and a non-sulfonated layer.
Fig. 2 is a schematic view showing a method for determining yield strength from a stress-strain curve in a tensile test.
Fig. 3 is a cross section schematic view in a thickness direction of a semipermeable membrane of the present invention.
Fig. 4 is an example of a SEM image of the cross section in the thickness direction of the semipermeable membrane of the present invention.
Fig. 5 is a graph showing an example of an analysis result by elemental analysis.

DESCRIPTION OF EMBODIMENTS

Hereinafter, embodiments of the present invention will be described specifically, but the present invention is not limited to the following embodiments, and it should be understood that an appropriate design change, improvement, etc. may be added based on ordinary knowledge of an ordinary skill in the art, without departing from the scope of the present invention.

To give chemical resistance to a semipermeable membrane, it is preferable that a resin itself used as a raw material is excellent in the chemical resistance. Examples of such a resin include a polyphenylene-based resin such as a polyphenylene ether resin, a polyphenylene oxide resin, and a polyphenylene sulfide resin. In the present invention, from a point of view of excellent, etc. in heat resistance, shock resistance, strength, and the chemical resistance, it is preferable to use a material containing the polyphenylene oxide resin. However, since the polyphenylene-based resin is hydrophobic, there is a problem that the membrane produced by the polyphenylene-based resin alone is very low in water permeability.

To improve the above problem, it needs application of hydrophilic treatment to the polyphenylene-based semipermeable membrane. For the hydrophilic treatment are considered introduction of a hydrophilic group (e.g., sulfonic acid group) to the semipermeable membrane and the hydrophilic treatment using alcohol. However, in the case of the introduction of the hydrophilic group to the semipermeable membrane, if the hydrophilic group is introduced to the whole membrane, there occurs disadvantage of reducing mechanical strength. Therefore, it has been found out that a portion of the semipermeable membrane is sulfonated, to maintain the mechanical strength and to improve water permeability performance.

It is preferable in the semipermeable membrane of the present invention that a thickness of a sulfonated layer is 50% or less of the whole membrane thickness. When the thickness of the sulfonated layer is more than 50% of the whole membrane thickness, hydrophilization progresses and balance between the water permeability performance and an ion-rejection rate sometimes becomes worse. To demonstrate separation functional performance as the semipermeable membrane, the thickness of the sulfonated layer is preferably in a range of 40% or less of the whole membrane thickness. On the other hand, the thickness of the sulfonated layer is preferably 5% or more. Since there sometimes occur problems such as reduction of the water permeability performance when the thickness of the sulfonated layer is thin, it is preferably 10% or more. Here, as described later, the thickness of the sulfonated layer is measured by a method of taking a photograph of a cross section of the sulfonated semipermeable membrane embedded in a resin piece by using a Scanning Electron Microscopy (SEM), and detecting elemental sulfur by EDS mapping.

In the present invention, it is preferable that sulfonation degree of the whole semipermeable membrane is $0.1 \times 10^4$ meq./m$^3$ to $9.0 \times 10^4$ meq./m$^3$. When the sulfonation degree is small, the sulfonated layer is insufficiently formed, tending to decrease the separation function (particularly, ion-rejection rate). Also, when the sulfonation degree is large, the strength of the membrane is decreased, not to sometimes secure stability of separation performance. Namely, as the semipermeable membrane, to secure the strength of the membrane and also secure sufficient separation function, it is preferably that the sulfonation degree is in a range of $0.5 \times 10^4$ meq./m$^3$ to $4.0 \times 10^4$ meq./m$^3$. Further, the sulfonation degree of the semipermeable membrane can be measured by a titration method as described later.

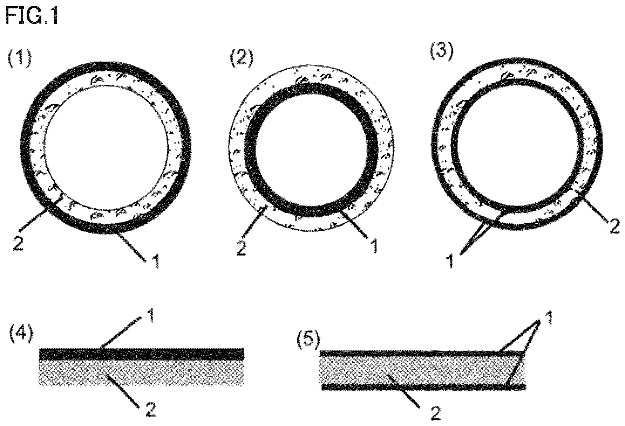

In the present invention, if the sulfonation degree of the whole semipermeable membrane meets the range described above, both surfaces of the semipermeable membrane may be sulfonated, but it is more preferable that a first surface of the semipermeable membrane is sulfonated, and a second surface is not sulfonated (Fig. 1). Specifically, it is preferable that the second surface has elemental sulfur ratio of less than 0.1 atm.%. Here, the elemental sulfur ratio can be measured by X-ray photoelectron spectroscopy described later from a membrane surface to a depth of around 10 nm. When the elemental sulfur ratio is high, the strength of the semipermeable membrane sometimes decreases.

The semipermeable membrane having properties as described above is excellent in the balance of the water permeability performance and the ion-rejection rate, and able to expresses high membrane strength (yield strength).

In the present invention, production of a hollow fiber type semipermeable membrane base material comprises: dissolving a polyphenylene-based resin in an aprotic solvent to obtain a film-forming solution (dissolving); discharging the film-forming solution in a hollow fiber form at a temperature of a temperature induced phase separation point or more from a spinning nozzle (discharging); bringing the film-forming solution discharged in the hollow fiber form into contact (immersing) with a mixed solution composed of water and an organic solvent to coagulate the film-forming solution (coagulating); washing the coagulated material in the hollow fiber form with warm water to remove excessive solvent and the like (washing); and drying it (drying).

In the present invention, production of a flat type semipermeable membrane base material comprises: spreading the film-forming solution, which is the same as that described above, on a glass plate and the like to have a uniform thickness by using an applicator, etc.; and after immersing it together with the glass plate in a coagulating liquid, collecting the semipermeable membrane base material from the glass plate. The semipermeable membrane base material collected is washed, and dried as needed.

The semipermeable membrane base material obtained can be easily sulfonated by bringing the first surface of the semipermeable membrane into contact with sulfuric acid. At this time, it is preferable that the second surface side is under the pressure so that the sulfuric acid does not penetrate in the inside of the membrane. The pressure applied is preferably 2 MPa or less by using nitrogen gas, etc. When the pressure is high, air bubbles are generated from the first surface to be sometimes partially insufficient in the sulfonation. Also, when the pressure is low, the sulfuric acid penetrates in the inside of the membrane, to be sometimes sulfonated up to the second surface. The sulfonation degree of the semipermeable membrane base material can be adjusted by a concentration of the sulfuric acid used and a contact time. The concentration of the sulfuric acid is preferably 90 to 98 wt.%, more preferably 93 to 95 wt.%. Further, the contact time is preferably 0.5 min. to 60 min., more preferably 30 min. When the concentration of the sulfuric acid is low, it needs a long time to obtain desired sulfonation degree or cannot attain the desired sulfonation degree. On the other hand, when the concentration of the sulfuric acid is high, it becomes difficult to adjust the sulfonation degree. Also, when the contact time is short, homogeneous sulfonation cannot be sometimes attained. On the other hand, when the contact time is long, the sulfonation progresses to the inside of the semipermeable membrane, not to be sometimes able to obtain necessary membrane strength.

EXAMPLES

Hereinafter, the present invention will be described in more detail with reference to examples, but the present invention is not limited to these.

(Measurement of Sulfonation Degree by Titration Method)

The sulfonation degree of the whole semipermeable membranes of Examples and Comparative Examples was measured by the titration method.

Premeasurement treatment: 1.0 g of dry weight was prepared as a sample amount, and the sample was cut into 3 cm square. Sulfuric acid treated semipermeable membrane was washed by pure water of 80°C, continuing until pH change (sulfuric acid residue) disappears, and vacuum drying was performed at 110°C for 5 hours. After that, the sample was immersed in a NaCl aqueous solution of 2.0 M for 24 hours, to substitute H$^+$, which is a counter ion of a sulfonic acid group, to Na$^+$.

Titration Experiment: by carrying out the titration of the above NaCl aqueous solution by using an automatic titrator (HIRANUMA Co., Ltd., COM-1700) with 0.010 M of NaOH, ion exchange capacity (IEC) was measured. Further, the sulfonation degree was calculated by the following expression.

IEC [meq./g] = Concentration of Sodium Hydroxide [M] $\times$ Titer [ml] / Sample Amount [g]

Sulfonation Degree [meq./m$^3$] = Concentration of Sodium Hydroxide [M] $\times$ Titer [ml] / Membrane Volume [m$^3$]

(Evaluation of Mechanical Strength of Semipermeable Membrane)

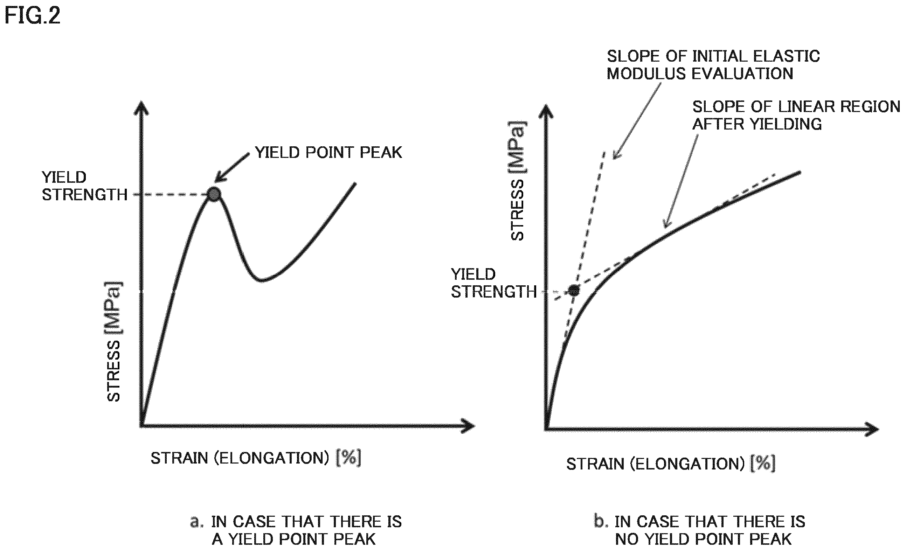

Evaluation of the mechanical strength of the semipermeable membranes of Examples and Comparable Examples was measured by using a tensile testing instrument (Shimadzu Corporation, EZ-SX) with respect to the semipermeable membranes prepared. The measurement samples were pretreated by immersion in 25 wt.% ethanol for 30 minutes and subsequent immersion in pure water for 24 hours. The tensile testing was performed at a testing speed of 20 mm/minutes by using a load cell of 50 N with 50 mm of an initial gage length at both ends cramped. An average of 10 measurement values was regarded as a measured value of yield strength. Here, when a clear yield point was present in the stress-strain curve, its value was adopted as the yield strength. When there was no clear yield point peak, the value of the yield strength was determined to the value of a point of intersection of a linear line for obtaining an initial elastic modulus in the stress-strain curve and a linear line (tangential line) in a linear region (elongation: 10 to 30%) after yielding (Fig. 2).

(Evaluation of Ratio of Sulfonated Region in Membrane Cross Section)

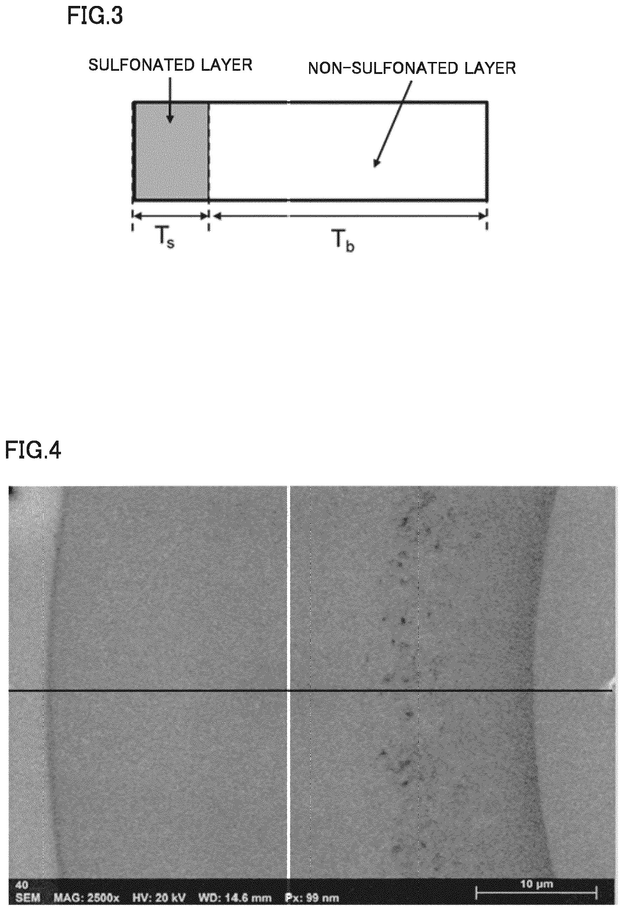

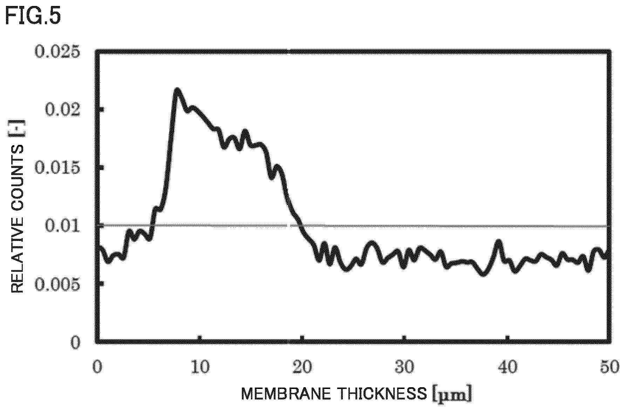

Evaluation of a ratio of a sulfonated region in membrane cross sections of the semipermeable membranes of Examples and Comparative Examples was performed by SEM-EDS measurement (SEM: S4800 produced by Hitachi High-Technologies Corporation, Detector: Energy Dispersive X-ray Spectrometer produced by BRUKER Corporation).
The sample was embedded in an epoxy resin (Nacalai Tesque, Inc., LUVEAK-812), and a cross section was produced by using a microtome with a glass knife attached. The sample was fixed on a sample stage and deposited with osmium, and elemental analysis was performed by using the above microscope with 10 kV of an acceleration voltage.
The SEM-EDS measurement was performed, and line-analysis of elemental sulfur was performed with respect to the cross section of the membrane (Figs. 3-5). A baseline was set at 0.01 or less in terms of relative counts (counts /sum of the total counts), and the ratio of the sulfonated region was calculated by the following expression.

Ratio of Sulfonated Layer [%] = Thickness of Sulfonated Layer [$\mu$m] / (Thickness of Sulfonated Layer (Ts) [$\mu$m] + Thickness of Non-Sulfonated Layer (Tb) [$\mu$m]) $\times$ 100

(Calculation of Elemental Sulfur Ratio on Membrane Surface)

An elemental sulfur ratio was calculated through analysis of the elemental sulfur of the semipermeable membrane by XPS measurement (K-Alpha$^+$, produced by Thermo Fisher Scientific Inc.). In case of the hollow fiber type semipermeable membrane, with respect to an outer surface side, it was measured as it was, and with respect to an inner surface side, it was measured by exposing the inner surface side of the hollow fiber membrane by cutting with a knife.
Further, in the XPS, the elemental sulfur ratio can be measured from the surface to a depth of around 10 nm.

Measurement Conditions

    Excited X-ray: monochromated Al K$\alpha$ ray
    X-ray output: 12 kV, 2.5 mA
    Angle of emission of photoelectron: 90°
    Spot size: around 200 $\mu$m $\phi$
    Path energy: 50 eV
    Step: 0.1 eV

(Membrane Performance Evaluation)

400 pieces of semipermeable membranes (hollow fiber type semipermeable membranes) of Examples and Comparative Examples were bundled in a loop, and end points of the loop were adhered by using a 2-part epoxy resin, and after inserting opening end sides of the hollow fiber type semipermeable membranes into a sleeve made of polycarbonate of 5 cm, the 2-part epoxy resin was injected into the sleeve, to be cured and sealed. The end portions of the hollow fiber type semipermeable membranes cured by a thermosetting resin were cut, to obtain opening surfaces of the hollow fiber type semipermeable membranes and to prepare a module for evaluation.
The module for evaluation was attached to a water permeability testing apparatus for a hollow fiber, and membrane performance evaluation was performed at an operating pressure of 0.5 MPa by using a NaCl aqueous solution of 1500 ppm.

With respect to the membrane permeated water collected in a water permeability testing and a supplied aqueous solution, conductivity was measured by using an electrical conductivity meter (Horiba Ltd., DS-70), to calculate the ion-rejection rate by the following expression.

Ion-Rejection Rate [%] = (1 - Conductivity of Filtrate [$\mu$S/cm] / Conductivity of Supplied Aqueous Solution [$\mu$S/cm]) $\times$ 100

Also, by using the pure water, measurement of pure water Flux was performed at the operating pressure of 0.5 MPa.

The pure water Flux was calculated by the following expression.

Pure Water Flux [L/(m$^2\cdot$day)] = Permeated Water Amount [L] / Membrane Surface Area [m$^2$] / Sampling Time [day]

(Example 1)

With respect to polyphenylene oxide (SABIC Innovative Plastics, PPO 646), N-methyl-2-pyrolidone (Nacalai Tesque, Inc., Extra Pure Reagent) was added, up to 30 wt.%, and after preparing homogeneous suspension by kneading, a homogeneous spinning solution was obtained by heating while kneading at a temperature of 100°C. The spinning solution obtained was extruded by a fixed quantity from a slit portion of a double cylindrical tube nozzle. From an inner hole of the double cylindrical tube nozzle, RO water was discharged by a fixed quantity as an inner liquid, and while inducing phase separation in the inner layer portion of the spinning solution extruded into a hollow shape, drying treatment of the surface layer portion of the spinning solution was performed in an air gap, and then in a coagulation bath, the phase separation progressed completely. After fully rinsing the solidified material in a hollow fiber form, it was winded in a water-containing state.

The resulting material in the hollow fiber form was cut into 100 cm in length, and subjected to immersion rinsing with the pure water of 60°C and wind drying for one night. Using the obtained semipermeable membrane base material, the modules for evaluation were prepared.

While applying pressure (1.5 MPa) to the inner side of the hollow fiber membrane of the module with the nitrogen gas, a sulfuric acid solution of 92.5% was brought into contact with the outer side of the hollow fiber membrane for 30 minutes, to obtain a semipermeable membrane of Example 1. An inner diameter of the semipermeable membrane was 240 $\mu$m.

(Example 2)

A semipermeable membrane of Example 2 was obtained in the same manner as Example 1 except that a sulfuric acid solution of 93.5% was brought into contact for 30 minutes. The inner diameter of the semipermeable membrane was 240 $\mu$m.

(Example 3)

A semipermeable membrane of Example 3 was obtained in the same manner as Example 1 except that a sulfuric acid solution of 94.5% was brought into contact for 30 minutes. The inner diameter of the semipermeable membrane was 240 $\mu$m.

(Example 4)

A semipermeable membrane of Example 4 was obtained in the same manner as Example 1 except that the sulfuric acid solution of 94.5% was brought into contact for 1 minute. The inner diameter of the semipermeable membrane was 240 $\mu$m.

(Example 5)

A semipermeable membrane of Example 5 was obtained in the same manner as Example 1 except that the sulfuric acid solution of 94.5% was brought into contact for 5 minutes. The inner diameter of the semipermeable membrane was 240 $\mu$m.

(Example 6)

A semipermeable membrane of Example 6 was obtained in the same manner as Example 1 except that the sulfuric acid solution of 94.5% was brought into contact for 10 minutes. The inner diameter of the semipermeable membrane was 240 $\mu$m.

(Comparative Example 1)

A semipermeable membrane of Comparative Example 1 was obtained in the same manner as Example 1 except that the sulfuric acid solution was not brought into contact.

(Comparative Example 2)

A semipermeable membrane of Comparative Example 2 was obtained in the same manner as Example 1 except that a sulfuric acid solution of 95.5% was brought into contact for 30 minutes.

(Comparative Example 3)

A semipermeable membrane of Comparative Example 3 was obtained in the same manner as Example 1 except that a sulfuric acid solution of 96.5% was brought into contact for 30 minutes.

(Comparative Example 4)

A semipermeable membrane of Comparative Example 4 was obtained in the same manner as Example 1 except that membrane production was performed by using PPO which was subjected to sulfonation treatment at a stage of a raw material, and the sulfonation treatment after the membrane production was not performed.

[Table 1]

| Table 1 | Sulfonation Degree of Whole Membrane [×10⁴ meq./m³] | Thickness of Sulfonated Layer [μm] | Thickness of Non-Sulfonated Layer [μm] | Ratio of Sulfonated Region [%] | Flux [LMD] | Rejection Rate [%] | Yield Strength [MPa] | Elemental Sulfur Ratio First Surface [atm%] | Elemental Sulfur Ratio Second Surface [atm%] |
|---|---|---|---|---|---|---|---|---|---|
| Example 1 | 0.71 | 6.8 | 38.3 | 15 | 20 | 70 | 16 | 0.6 | <0.1 |
| Example 2 | 1.2 | 11.3 | 33.8 | 25 | 60 | 52 | 15 | 1.5 | <0.1 |
| Example 3 | 3.9 | 15.8 | 29.3 | 35 | 200 | 48 | 13.9 | 1.9 | <0.1 |
| Example 4 | 0.69 | 5.4 | 39.6 | 12 | 9 | 77 | 15.2 | 0.6 | <0.1 |
| Example 5 | 1.3 | 8.1 | 36.9 | 18 | 32 | 67 | 14.5 | 1.1 | <0.1 |
| Example 6 | 1.6 | 13.5 | 31.5 | 30 | 55 | 54 | 14.5 | 1.3 | <0.1 |
| Comparative Example 1 | Out of Measure | 0 | 45 | 0 | 1300 | 3 | 15.2 | <0.1 | <0.1 |
| Comparative Example 2 | 6.2 | 45 | 0 | 100 | 310 | 27 | 12 | 3.3 | 0.1 |
| Comparative Example 3 | 25 | 45 | 0 | 100 | Out of Measure | Out of Measure | 10 | 5.2 | 1.3 |
| Comparative Example 4 | 2 | 45 | 0 | 100 | 2200 | 38 | 4.8 | 2 | 2 |

As apparent from Table 1, it has found that the semipermeable membranes of Examples 1 to 6 were appropriate in the ratio of the sulfonation region and therefore excellent in balance of the water permeability, separation characteristics and the mechanical strength. In contrast, it has been seen that the semipermeable membrane of Comparative Example 1 is high in the mechanical strength because of not performing sulfonation treatment, but low in a function as the separating membrane because salt removal rate was only 5%. Further, the semipermeable membranes of Comparative Examples 2 to 3 were low in the mechanical strength because the whole membranes were sulfonated, resulting in unfavorable balance of the water permeability and the separation characteristics. Also, with respect to the semipermeable membrane of Comparative Example 4, it has been found that it is very high in the water permeable performance, but is not good in the balance with the ion-rejection rate and very low in the mechanical strength.

INDUSTRIAL APPLICABILITY

As described above in detail, according to the present invention, it is possible to achieve the chemical resistance (chlorine resistance, acid resistance, alkali resistance), the membrane performance and the membrane strength, since only portion of the membrane is sulfonated by sulfonating the polyphenylene-based porous base material membrane on the specific conditions.

REFERENCE SIGNS LIST

1    sulfonated layer
2    non-sulfonated layer

**Claims**

1.  A polyphenylene-based semipermeable membrane that is composed of a material comprising a polyphenylene-based resin,

    wherein the semipermeable membrane has a first surface of which at least a portion is sulfonated, and wherein, when concentration distribution of elemental sulfur derived from a sulfonic acid group is measured by elemental analysis in a cross section in a thickness direction of the semipermeable membrane, a ratio of a sulfonated layer obtained by the following expression is 50% or less:

    Ratio of Sulfonated Layer (%) = Sulfonated Layer Thickness / (Sulfonated Layer Thickness + Non-Sulfonated Layer Thickness) $\times$ 100;

    wherein the sulfonated layer thickness and the non-sulfonated layer thickness are measured according to the description.

2.  The polyphenylene-based semipermeable membrane according to claim 1, wherein the ratio is 5% or more and 40% or less.

3.  The polyphenylene-based semipermeable membrane according to claim 1 or 2, wherein a second surface of the semipermeable membrane is not sulfonated.

4.  The polyphenylene-based semipermeable membrane according to any one of claims 1 to 3, wherein the second surface of the semipermeable membrane has an elemental sulfur ratio of less than 0.1 atm.%.

5.  The polyphenylene-based semipermeable membrane according to any one of claims 1 to 4, wherein sulfonation degree is $0.1 \times 10^4$ meq./m$^3$ to $9.0 \times 10^4$ meq./m$^3$.

6.  A method for producing the polyphenylene-based semipermeable membrane according to any one of claims 1 to 5, wherein sulfonation treatment is performed by bringing sulfuric acid into contact with a first surface of a semipermeable membrane base material that is produced from a material comprising a polyphenylene-based resin.

7. The method for producing the polyphenylene-based semipermeable membrane according to claim 6, wherein the sulfuric acid has a concentration of 90 to 98 wt.%.

8. The method for producing the polyphenylene-based semipermeable membrane according to claim 6 or 7, wherein the sulfuric acid is brought into contact with the first surface of the semipermeable membrane base material while a second surface side is under pressure.

**Patentansprüche**

1. Eine semipermeable Membran auf Polyphenylenbasis, welche aus einem Material gebildet ist, das ein Harz auf Polyphenylenbasis umfasst,

    wobei die semipermeable Membran eine erste Oberfläche aufweist, von der mindestens ein Teil sulfoniert ist, und wobei, wenn die Konzentrationsverteilung von elementarem Schwefel, welcher von einer Sulfonsäuregruppe abgeleitet ist, durch Elementaranalyse in einem Querschnitt in Dickenrichtung der semipermeablen Membran gemessen wird, ein Anteil einer sulfonierten Schicht, welcher durch den folgenden Ausdruck erhalten wird, 50 % oder weniger beträgt:

    Anteil der sulfonierten Schicht (%) = Dicke der sulfonierten Schicht / (Dicke der sulfonierten Schicht + Dicke der nicht sulfonierten Schicht) $\times$ 100;

    wobei die Dicke der sulfonierten Schicht und die Dicke der nicht sulfonierten Schicht gemäß der Beschreibung gemessen werden.

2. Die semipermeable Membran auf Polyphenylenbasis gemäß Anspruch 1, wobei der Anteil 5 % oder mehr und 40 % oder weniger beträgt.

3. Die semipermeable Membran auf Polyphenylenbasis gemäß Anspruch 1 oder 2, wobei eine zweite Oberfläche der semipermeablen Membran nicht sulfoniert ist.

4. Die semipermeable Membran auf Polyphenylenbasis gemäß einem der Ansprüche 1 bis 3, wobei die zweite Oberfläche der semipermeablen Membran einen Anteil an elementarem Schwefel von weniger als 0,1 atm.% aufweist.

5. Die semipermeable Membran auf Polyphenylenbasis gemäß einem der Ansprüche 1 bis 4, wobei der Sulfonierungsgrad $0,1 \times 10^4$ mäq./m$^3$ bis $9,0 \times 10^4$ mäq./m$^3$ beträgt.

6. Ein Verfahren zur Herstellung der semipermeablen Membran auf Polyphenylenbasis gemäß einem der Ansprüche 1 bis 5, wobei die Sulfonierungsbehandlung durch In-Kontakt-Bringen von Schwefelsäure mit einer ersten Oberfläche eines semipermeablen Membranbasismaterials, das aus einem Material hergestellt ist, welches ein Harz auf Polyphenylenbasis umfasst, durchgeführt wird.

7. Das Verfahren zur Herstellung der semipermeablen Membran auf Polyphenylenbasis gemäß Anspruch 6, wobei die Schwefelsäure eine Konzentration von 90 bis 98 Gew.-% aufweist.

8. Das Verfahren zur Herstellung der semipermeablen Membran auf Polyphenylenbasis gemäß Anspruch 6 oder 7, wobei die Schwefelsäure mit der ersten Oberfläche des semipermeablen Membranbasismaterials in Kontakt gebracht wird, während eine zweite Oberflächenseite unter Druck steht.

**Revendications**

1. Membrane semi-perméable à base de polyphénylène qui est composée d'un matériau comprenant une résine à base de polyphénylène,

    laquelle membrane semi-perméable a une première surface dont au moins une partie est sulfonée, et

dans laquelle, quand la distribution de concentration de soufre élémentaire dérivé d'un groupe acide sulfonique est mesurée par analyse élémentaire dans une coupe transversale dans le sens de l'épaisseur de la membrane semi-perméable, la proportion de la couche sulfonée obtenue par l'expression qui suit est de 50 % ou moins :

proportion de la couche sulfonée (%) = épaisseur de la couche sulfonée / (épaisseur de la couche sulfonée + épaisseur de la couche non sulfonée) $\times$ 100 ;

dans laquelle l'épaisseur de la couche sulfonée et l'épaisseur de la couche non sulfonée sont mesurées conformément à la description.

2. Membrane semi-perméable à base de polyphénylène selon la revendication 1, dans laquelle la proportion est de 5 % ou plus et 40 % ou moins.

3. Membrane semi-perméable à base de polyphénylène selon la revendication 1 ou 2, dans laquelle une deuxième surface de la membrane semi-perméable n'est pas sulfonée.

4. Membrane semi-perméable à base de polyphénylène selon l'une quelconque des revendications 1 à 3, dans laquelle la deuxième surface de la membrane semi-perméable a une proportion de soufre élémentaire inférieure à 0,1 % atomique.

5. Membrane semi-perméable à base de polyphénylène selon l'une quelconque des revendications 1 à 4, dans laquelle le degré de sulfonation est de $0,1 \times 10^4$ méq./m$^3$ à $9,0 \times 10^4$ méq./m$^3$.

6. Méthode pour produire la membrane semi-perméable à base de polyphénylène de l'une quelconque des revendications 1 à 5, dans laquelle un traitement de sulfonation est effectué par mise en contact d'acide sulfurique avec une première surface d'un matériau de base de membrane semi-perméable qui est produit à partir d'un matériau comprenant une résine à base de polyphénylène.

7. Méthode pour produire une membrane semi-perméable à base de polyphénylène selon la revendication 6, dans laquelle l'acide sulfurique a une concentration de 90 à 98 % en poids.

8. Méthode pour produire une membrane semi-perméable à base de polyphénylène selon la revendication 6 ou 7, dans laquelle l'acide sulfurique est mis en contact avec la première surface du matériau de base de membrane semi-perméable alors qu'une deuxième côté surface est sous pression.

FIG.1

(1)

(2)

(3)

(4)

(5)

# FIG.2

a. IN CASE THAT THERE IS
A YIELD POINT PEAK

b. IN CASE THAT THERE IS
NO YIELD POINT PEAK

FIG.3

SULFONATED LAYER    NON-SULFONATED LAYER

$T_s$    $T_b$

FIG.4

40
SEM   MAG: 2500x   HV: 20 kV   WD: 14.6 mm   Px: 99 nm    10 μm

## FIG.5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 55147106 A
- WO 199734686 A
- JP 2013031836 A

**Non-patent literature cited in the description**

- **FU et al.** *J. Appl. Polym. Sci.*, vol. 51 (8), 1399-1404